# FASCICULE DE BREVET EUROPEEN

(11) **EP 2 396 182 B1**
(45) Date de publication et mention de la délivrance du brevet: **03.04.2013**
(21) Numéro de dépôt: 10707086.4
(22) Date de dépôt: 10.02.2010
(51) Int. Cl.: B60C 27/12

(54) **DISPOSITIF ANTIDÉRAPANT POUR PNEU D'UNE ROUE DE VÉHICULE**
ANTIRUTSCHVORRICHTUNG FÜR DEN REIFEN EINES FAHRZEUGRADES
ANTI-SKID DEVICE FOR A TYRE OF A VEHICLE WHEEL

(30) Priorité: 13.02.2009 FR 0900675
(43) Date de publication de la demande: 21.12.2011
(73) Titulaire: Com21, 38570 Le Cheylas (FR)
(72) Inventeur: JOURDAN, Xavier, Pierre, F-38570 Le Cheylas (FR)
(74) Mandataire: Hecké, Gérard
(86) Numéro de dépôt international: PCT/FR2010/000104
(87) Numéro de publication internationale: WO 2010/092250

(56) Documents cités:
- EP-A- 1 221 386
- EP-A- 1 752 320

## Description

### Domaine technique de l'invention

L'invention est relative à un dispositif antidérapant pour pneu d'une roue de véhicule, comportant :
- un chemin de roulement antidérapant destiné à être placé sur la bande circonférentielle du pneu,
- des moyens de serrage du chemin de roulement sur la bande circonférentielle du pneu,
- des moyens de fixation avant répartis sur la périphérie du bord avant du chemin de roulement,
- un élément avant lié aux moyens de fixation avant et formant butée contre le flanc avant du pneu après actionnement des moyens de serrage,
- des moyens de fixation arrière répartis sur la périphérie du bord arrière du chemin de roulement,
- et un élément allongé lié aux moyens de fixation arrière et formant butée contre le flanc arrière ou la bande circonférentielle du pneu après actionnement des moyens de serrage.

### État de la technique

L'accessibilité des volumes à l'arrière des roues sur les véhicules actuels est de plus en plus difficile. C'est pour cette raison que certains moyens de serrage sont prévus pour être actionnés depuis l'avant de la roue et que les opérations sur l'arrière de la roue (par exemple la fermeture de l'élément allongé) sont évitées.

Un tel dispositif antidérapant pour pneu est par exemple décrit dans le document CH677215 dans lequel l'élément allongé arrière est raccordé au bord arrière du chemin de roulement par des moyens de fixation arrière formés par des chaînettes. Les moyens de serrage du chemin de roulement sont formés par des moyens exerçant des forces centripètes sur l'élément avant constitué par une chaîne fermée sur elle-même. Il en résulte que les moyens de fixation avant sont radialement forcés vers l'intérieur de la roue, appliquant des efforts transversaux de traction au chemin de roulement vers l'avant de la roue. Par mise en butée arrière de l'élément allongé contre le flanc arrière du pneu, les moyens de fixation arrière, c'est-à-dire les chaînettes, sont forcés radialement vers l'extérieur de la roue pour exercer des efforts centrifuges vers l'extérieur de la roue sur l'élément allongé. L'élément allongé, en forme d'arc, ne participe donc pas à la fonction de serrage, ce résultat étant obtenu par les seuls efforts centripètes appliqués aux moyens de fixation avant, à l'avant de la roue. C'est pourquoi la fixation du dispositif antidérapant reste perfectible, avec tous les risques et désagréments impliqués.

Le document EP-A1-1752320 divulgue un dispositif remarquable en ce que l'élément allongé s'étend à coulissement à travers les moyens de fixation arrière et en ce que les moyens de serrage comprennent :
- au moins un organe de guidage traversant le chemin de roulement pour laisser coulisser librement une partie de l'élément allongé transversalement au chemin de roulement, en avant du bord avant du chemin de roulement,
- des moyens élastiquement extensibles agencés le long de l'élément allongé,
- et des moyens d'accrochage pour connecter au moins une extrémité de l'élément allongé à l'élément avant.

Il est nécessaire de mettre en place le dispositif antidérapant sur la partie supérieure du pneu, de réaliser une rotation de la roue, puis de mettre en place la partie restante avant d'accrocher l'élément allongé à l'élément avant. La mise en place reste longue, fastidieuse, et la tenue est perfectible.

### Objet de l'invention

L'objet de l'invention consiste à améliorer la mise en place et la tenue des dispositifs antidérapants existants.

Ce but est atteint par un dispositif selon les revendications annexées, et plus particulièrement par le fait que le chemin de roulement comprend des patins souples répartis le long d'un chemin de chaîne fermé sur lui-même de sorte que le chemin de roulement présente une forme continue et les patins souples sont échelonnés le long du chemin de chaîne, et que chaque patin souple comporte une extension flexible dirigée vers l'arrière du bord arrière du chemin de roulement, pour constituer les moyens de fixation arrière.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- les figures 1 et 2 représentent des vues en perspective avant et arrière d'un dispositif antidérapant selon l'invention,
- la figure 3 est une vue de dessus du dispositif des figures 1 et 2,
- les figures 4 et 5 sont des vues de côté du dispositif des figures 1 à 3 en situation sur une roue d'un véhicule, respectivement avant et après actionnement des moyens de serrage.

### Description d'un mode préférentiel de l'invention

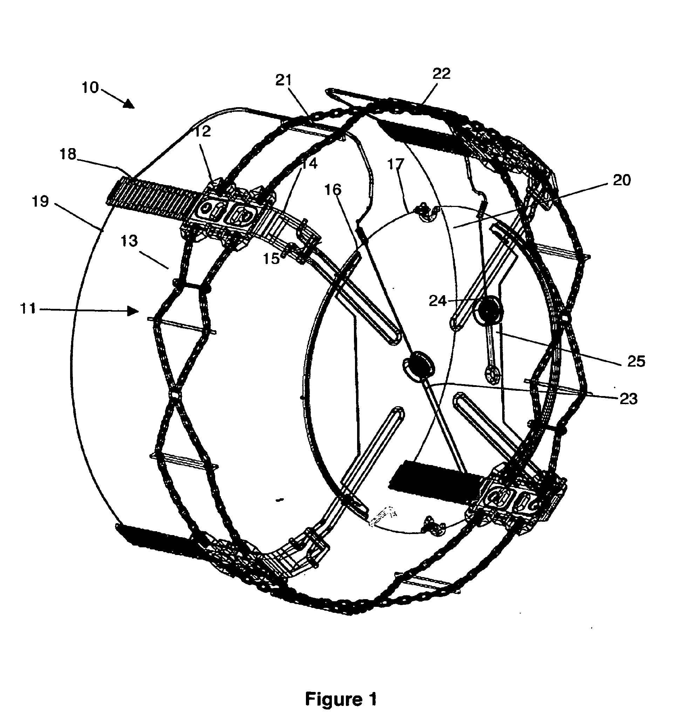

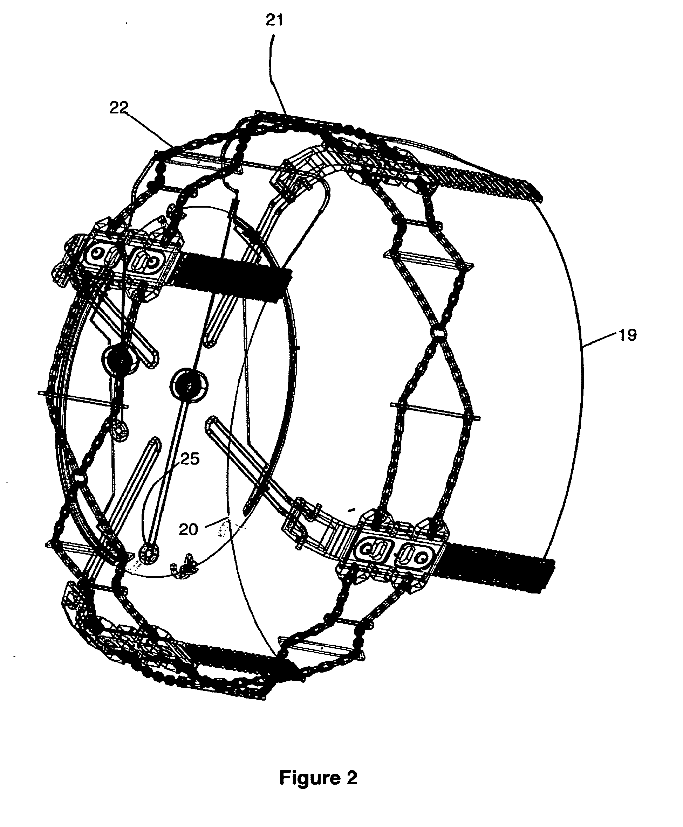

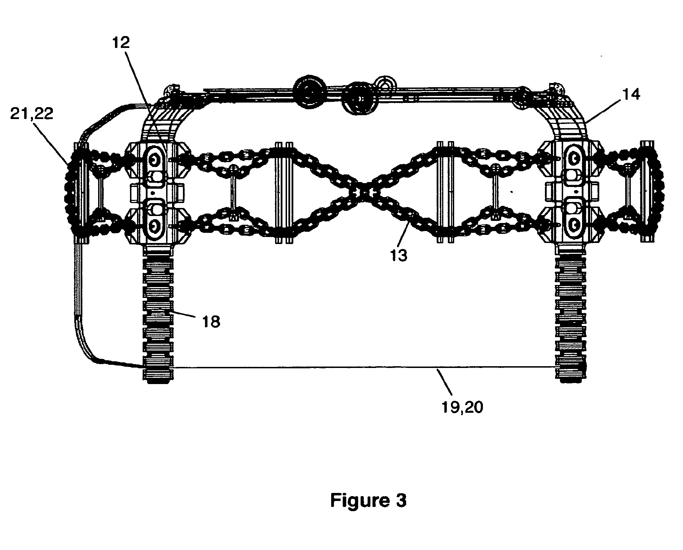

Sur les figures 1 à 5, un dispositif antidérapant 10 pour pneu d'une roue de véhicule comporte un chemin de roulement 11 antidérapant continu destiné à être placé sur la bande circonférentielle du pneu. Des moyens de serrage (décrits ultérieurement) du chemin de roulement 11 sur la bande circonférentielle du pneu sont prévus pour garantir le maintien en position du dispositif antidérapant 10 après sa mise en place sur le pneu. Le chemin de roulement 11, lorsqu'il est monté sur le pneu de la roue, prend une forme sensiblement circulaire et définit un axe principal qui coïncide avec l'axe de rotation de la roue.

Dans la suite de la présente demande, le sens avant et le sens arrière correspondent respectivement aux sens dirigés vers l'extérieur et vers l'intérieur du véhicule selon l'axe principal. Le bord avant du chemin de roulement 11 correspond au bord du chemin de roulement 11 contenu dans un plan perpendiculaire à l'axe principal et orienté vers l'extérieur du véhicule. Une définition similaire du bord arrière du chemin de roulement 11 s'applique vers l'intérieur du véhicule. Les flancs arrière et avant du pneu désignent les flancs respectivement orientés vers l'intérieur et l'extérieur du véhicule. Les flancs arrière et avant du pneu sont raccordés l'un à l'autre par la bande circonférentielle du pneu.

Le chemin de roulement 11 comprend des patins souples 12 répartis le long d'un chemin de chaîne 13 fermé sur lui-même. Le chemin de roulement 11 présente donc une forme continue et les patins souples 12 sont échelonnés le long du chemin de chaîne 13 pour réaliser un guidage des chaînes du chemin de chaîne 13. La forme et la longueur du chemin de chaîne sont fonction de l'utilisation et du type de véhicule à équiper. Les patins souples 12 et les chaînes du chemin de chaîne 13 sont reliés mécaniquement, solidairement par tout moyen idoine ou à coulissement. Le nombre de patins souples 12 est variable, par exemple compris entre deux et six. Le chemin de chaîne 13 peut incorporer des éléments de réglage éventuellement automatique et d'ajustement.

Des moyens de fixation avant sont répartis sur la périphérie du bord avant du chemin de roulement 11. Pour cela, chaque patin souple 12 peut comporter une languette 14 dirigée vers l'avant du bord avant du chemin de roulement 13. Chaque languette 14 est recourbée de manière à être orientée naturellement en direction du centre de la roue lorsque le dispositif antidérapant 10 est monté sur le pneu de la roue. Un crochet 15 est articulé sur chacune des languettes 14, de manière à pouvoir venir occuper une position prolongeant la languette 14 en direction du centre de la roue.

Du côté intérieur, des moyens de fixation arrière sont répartis sur la périphérie du bord arrière du chemin de roulement 11. Pour constituer les moyens de fixation arrière, chaque patin souple 12 comporte une extension flexible 18 dirigée vers l'arrière du bord arrière du chemin de roulement 11. Au moins un élément allongé est lié aux moyens de fixation arrière, plus précisément à l'extrémité de chacune des extensions 18 opposée à celle raccordée au corps du patin 12.

Chaque élément allongé peut border un secteur angulaire complet ou partiel du bord arrière du chemin de roulement. Dans le cas de plusieurs éléments allongés, ils peuvent avantageusement border des secteurs angulaires distincts. Chaque élément allongé peut s'étendre à coulissement à travers les moyens de fixation arrière ou être lié à ces derniers de manière fixe. Pour cela, des moyens pour porter l'élément allongé à coulissement libre peuvent être aménagés à l'extrémité libre de chaque extension flexible 18. Chacun des éléments allongés peut être élastique ou non.

Un élément avant 17 est lié par tout moyen adapté (soudure, vis...) aux différents crochets 15 de sorte que l'élément avant 17 est lié aux moyens de fixation avant. Les moyens de fixation avant sont constitués par la combinaison des languettes 14, des crochets 15 et des éventuels éléments de liaison entre l'élément avant 17 et les crochets 15. Ainsi, ledit au moins un crochet 15 est solidaire de l'élément avant 17. L'élément avant 17 peut par exemple être un arceau flexible constitué par deux arcs hémicirculaires connectés entre eux par leurs extrémités. Deux extrémités en correspondance peuvent alors être liées par une articulation, de sorte que l'élément avant 17 peut être replié à la manière d'une charnière. Toutefois, l'élément avant peut présenter une forme quelconque, par exemple en forme de croix constituée par deux barres réunies par leur centre. La fonction de l'élément avant est d'imposer aux patins souples 12 un diamètre maximal correspondant à la dimension de la bande circonférentielle du pneu.

Outre ledit au moins un élément allongé éventuellement lié à coulissement aux moyens de fixation arrière, les moyens de serrage peuvent facultativement comprendre au moins un organe de guidage traversant le chemin de roulement 11 pour laisser coulisser librement une partie de l'élément allongé transversalement au chemin de roulement 11 pour venir en avant du bord avant du chemin de roulement 11. L'organe de guidage peut être solidaire du chemin de roulement ou de l'élément avant 17, de manière à former un point d'arrêt par rapport au coulissement de l'élément allongé. Dans une variante renforçant l'effet de serrage du chemin de roulement 11 sur la bande circonférentielle, l'élément allongé est constitué par deux câbles 19, 20 indépendants bordant deux secteurs angulaires distincts du bord arrière du chemin de roulement 11 et empruntant chacun un passage 21, 22 respectif de l'organe de guidage. L'élément allongé comporte alors deux parties de câble distinctes en avant du bord avant du chemin de roulement 11.

Les moyens de serrage comprennent également des moyens élastiquement extensibles agencés le long de l'élément allongé, à un emplacement quelconque. Dans le cas particulier où l'élément allongé est formé par deux câbles indépendants, chacun des câbles 19, 20 peut comprendre un organe élastiquement extensible 23, 24. Dans ce cas, l'organe élastiquement extensible 23, 24 de chacun des câbles 19, 20 peut être disposé sur la partie de câble en avant du bord avant du chemin de roulement 11.

Pour terminer la fonction de serrage, des moyens d'accrochage peuvent être prévus pour connecter au moins une extrémité de l'élément allongé à l'élément avant 17. Les moyens d'accrochage peuvent par exemple coopérer avec ledit au moins un crochet 15 solidaire de l'élément avant 17, au niveau de l'extrémité libre du crochet 15 opposée à l'extrémité raccordée au corps du patin souple 12. Les moyens d'accrochage peuvent être formés par une attache 25 montée à l'extrémité libre de la partie de câble 19, 20 en avant du bord avant du chemin de roulement 11. L'extrémité opposée de chacun des câbles 19, 20, en arrière du bord arrière du chemin de roulement 11, peut être équipée d'un butoir venant en butée contre l'une des extensions flexibles 18, pour bloquer le coulissement des câbles.

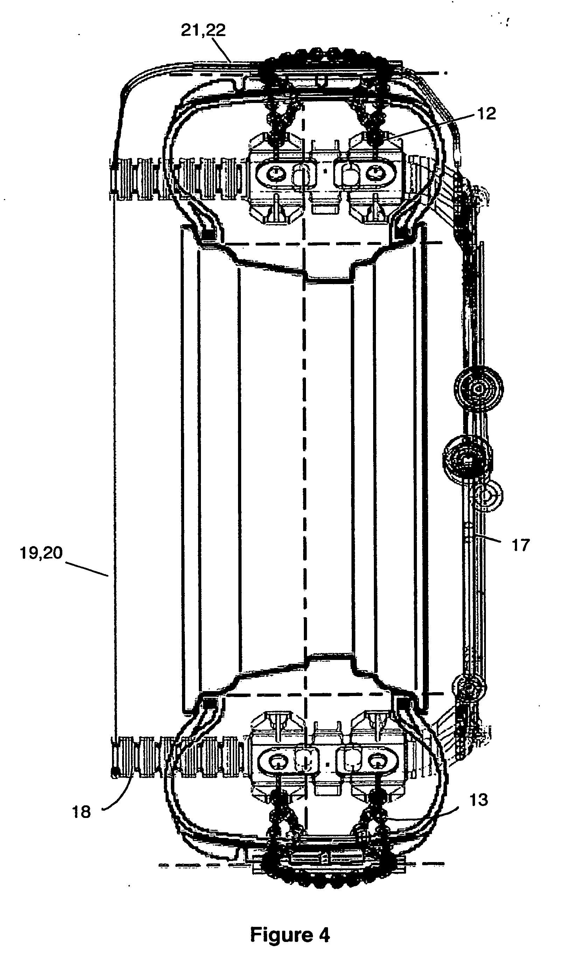

Une fois monté sur la roue, le dispositif antidérapant 10 est maintenu en place après actionnement des moyens de serrage. Pour actionner les moyens de serrage, il suffit de tirer sur la partie de l'élément allongé en avant du bord avant du chemin de roulement 11 pour mettre en tension les moyens élastiquement extensibles avant d'accrocher l'extrémité de l'élément allongé sur l'élément avant 17. L'élément avant 17 forme butée contre le flanc avant du pneu après actionnement des moyens de serrage. L'élément allongé forme butée contre le flanc arrière ou la bande circonférentielle du pneu après actionnement des moyens de serrage. Ces butées avant et arrière empêchent le chemin de roulement 11 de se translater selon l'axe principal. En référence à la figure 4, le dispositif antidérapant 10 est positionné alors que les moyens d'accrochage ne sont pas liés à l'élément avant. Les moyens de fixation arrière ne subissent pas de sollicitation mécanique et les extensions flexibles 18 ne sont pas recourbées radialement en direction de l'axe principal, permettant de positionner le chemin de roulement 11 autour de la bande circonférentielle du pneu dans la partie supérieure du pneu. Les passages 21, 22 sont positionnés sur la partie supérieure de la bande circonférentielle. Dans cet état, le chemin de roulement 11 ne recouvre que partiellement la bande circonférentielle, sa partie inférieure étant inaccessible.

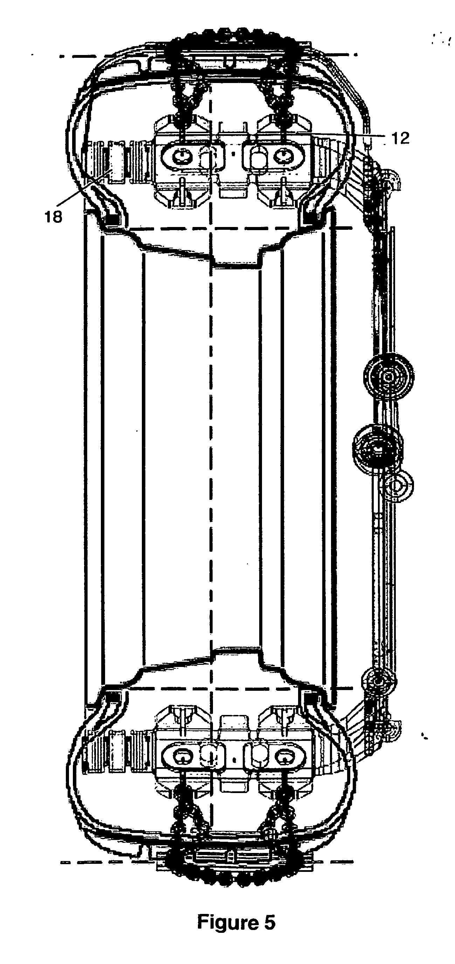

Ensuite, les câbles 19, 20 sont tirés 11 pour mettre en tension les organes élastiquement extensibles 23, 24 avant d'accrocher les attaches 25 sur l'élément avant 17 par l'intermédiaire des crochets 15. Les extensions flexibles se plient radialement vers l'intérieur pour venir en appui contre le flanc arrière du pneu. L'application ultérieure d'une rotation à la roue suffit sans autre opération manuelle à ce que le reste du chemin de roulement 11 vienne recouvrir le reste de la bande circonférentielle du pneu sous l'effet des forces centrifuges conjuguées aux forces radiales vers l'intérieur appliquées aux extensions flexibles (figure 5).

Contrairement à l'art antérieur et par le fait que le chemin de roulement soit prolongé vers l'arrière par des éléments (extensions flexibles 18) qui sont capables d'exercer une force de réaction sur le flanc arrière du pneu, le positionnement et la mise sous tension du dispositif antidérapant 10 sur le pneu de la roue de véhicule suffisent donc lors de la mise en mouvement du véhicule à engendrer le montage complet du dispositif sans autre intervention par l'utilisateur, puis son maintien et son auto-positionnement,.

Les moyens de serrage sont capables de solliciter radialement les moyens de fixation arrière vers l'intérieur de la roue. L'élément allongé s'étend depuis l'arrière de la roue et jusqu'à l'avant du chemin de roulement 11 de manière à être préhensibles par un utilisateur depuis l'avant de la roue. Après accrochage, les organes élastiquement extensibles 23, 24 réalisent une mise sous tension mécanique de l'élément allongé. Il en résulte une force de traction exercée sur l'élément avant 17, ce qui force les moyens de fixation avant radialement vers l'intérieur de la roue, participant au serrage du chemin de roulement 11. Par contre-réaction, les organes élastiquement extensibles 23, 24 exercent une force de traction sur l'élément allongé, ce qui force les moyens de fixation arrière radialement vers l'intérieur de la roue, complétant ainsi l'effet de serrage du chemin de roulement 11.

Il est possible d'envisager un montage où l'élément allongé est constitué par un seul câble ou par différents tronçons angulaires formés par des éléments élastiques. D'autre part, chacun des câbles utilisés peut être remplacé par une chaînette ou par un élément élastique.

L'avantage de prévoir deux systèmes indépendants chacun formé par un câble 19, 20 engagé à coulissement dans deux plusieurs patins souples 12, est d'accroître la sécurité : la rupture de l'un des systèmes n'engendre pas la perte du dispositif antidérapant.

Enfin l'invention reste applicable même dans le cas où l'élément allongé ne coulisse pas librement dans un organe de guidage traversant le chemin de roulement.

## Revendications

1. Dispositif antidérapant (10) pour pneu d'une roue de véhicule, comportant :
- un chemin de roulement (11) antidérapant destiné à être placé sur la bande circonférentielle du pneu,
- des moyens de serrage du chemin de roulement (11) sur la bande circonférentielle du pneu,
- des moyens de fixation avant (14, 15, 16) répartis sur la périphérie du bord avant du chemin de roulement (11),
- un élément avant (17) lié aux moyens de fixation avant (14, 15, 16) et formant butée contre le flanc avant du pneu après actionnement des moyens de serrage,
- des moyens de fixation arrière (18) répartis sur la périphérie du bord arrière du chemin de roulement (11),
- et au moins un élément allongé lié aux moyens de fixation arrière (18) et formant butée contre le flanc arrière ou la bande circonférentielle du pneu après actionnement des moyens de serrage,
**caractérisé en ce que** le chemin de roulement (11) comprend des patins souples (12) répartis le long d'un chemin de chaîne (13) fermé sur lui-même de sorte que le chemin de roulement (11) présente une forme continue et les patins souples (12) sont échelonnés le long du chemin de chaîne (13), et **en ce que** chaque patin souple (12) comporte une extension flexible (18) dirigée vers l'arrière du bord arrière du chemin de roulement (11), pour constituer les moyens de fixation arrière (18).

2. Dispositif selon la revendication 1, **caractérisé en ce que** l'élément allongé s'étend à coulissement à travers les moyens de fixation arrière (18) et **en ce que** les moyens de serrage comprennent :
- au moins un organe de guidage traversant le chemin de roulement (11) pour laisser coulisser librement une partie de l'élément allongé transversalement au chemin de roulement (11), au-delà du bord avant du chemin de roulement (11),
- des moyens élastiquement extensibles (23, 24) agencés le long de l'élément allongé,
- et des moyens d'accrochage (25) pour connecter au moins une extrémité de l'élément allongé à l'élément avant (17).

3. Dispositif selon la revendication 2, **caractérisé en ce que** l'élément allongé est constitué par deux câbles (19, 20) indépendants bordant deux secteurs angulaires distincts du bord arrière du chemin de roulement (11) et empruntant chacun un passage (21, 22) respectif de l'organe de guidage, et **en ce que** chacun des câbles (19, 20) comprend un organe élastiquement extensible (23, 24).

4. Dispositif selon la revendication 3, **caractérisé en ce que** l'organe élastiquement extensible (23, 24) de chacun des câbles (19, 20) est disposé au-delà du bord avant du chemin de roulement (11).

5. Dispositif selon la revendication 2, **caractérisé en ce que** les moyens d'accrochage (25) coopèrent avec au moins un crochet (15) solidaire de l'élément avant (17).

6. Dispositif selon la revendication 1, **caractérisé en ce que** l'élément allongé est porté à coulissement libre à l'extrémité de l'extension flexible(18).

## Claims

1. An anti-skid device (10) for a tyre of a vehicle wheel, comprising:
- an anti-skid raceway (11) designed to be placed on the circumferential tread of the tyre,
- means for securing the raceway (11) on the circumferential tread of the tyre,
- front attachment means (14, 15, 16) arranged on the periphery of the front edge of the raceway (11),
- a front element (17) connected to the front attachment means (14, 15, 16) and forming a stop against the front wall of the tyre after the securing means have been actuated,
- rear attachment means (18) arranged on the periphery of the rear edge of the raceway (11),
- and at least one elongate element linked to the rear attachment means (18) and forming a stop against the rear wall or the circumferential tread of the tyre after the securing means have been actuated.
**characterized in that** the raceway (11) comprises flexible blocks (12) distributed along a chain track (13) forming a loop so that the raceway (11) presents a continuous shape and the flexible blocks (12) are spaced out along the chain track (13), and **in that** each flexible block (12) comprises a flexible extension (18) directed towards the rear of the rear edge of the raceway (11) to form the rear attachment means (18).

2. The device according to claim 1, **characterized in that** the elongate element extends in sliding manner through the rear attachment means (18) and **in that** the securing means comprise:
- at least one guide member passing through the raceway (11) to let a part of the elongate element slide freely transversely to the raceway (11), beyond the front edge of the raceway (11),
- elastically extensible means (23, 24) arranged along the elongate element,
- and securing means (25) to connect at least one end of the elongate element to the front element (17).

3. The device according to claim 2, **characterized in that** the elongate element is formed by two independent cables (19, 20) bordering two distinct angular sectors of the rear edge of the raceway (11) and each following a respective passage (21, 22) of the guide member, and **in that** each of the cables (19, 20) comprises elastically extensible means (23, 24).

4. The device according to claim 3, **characterized in that** the elastically extensible means (23, 24) of each of the cables (19, 20) are arranged beyond the front of the front edge of the raceway (11).

5. The device according to claim 2, **characterized in that** the securing means (25) collaborate with at least one hook (15) securedly affixed to the front element (17).

6. The device according to claim 1, **characterized in that** the elongate element is arranged with free sliding at the free end of the flexible extension (18).

## Patentansprüche

1. Rutschhemmende Vorrichtung (10) für den Reifen eines Fahrzeugrades, umfassend:
- einen rutschhemmenden Laufring (11), der dazu bestimmt ist, auf der Umfangsfläche des Reifens angeordnet zu werden,
- Mittel zum Festziehen des Laufrings (11) an der Umfangsfläche des Reifens,
- vordere Befestigungsmittel (14, 15, 16), die über den Umfang des vorderen Randes des Laufrings (11) verteilt sind,
- ein vorderes Element (17), das mit den vorderen Befestigungsmitteln (14, 15, 16) verbunden ist und an der vorderen Seitenfläche des Reifens nach Betätigen der Festziehmittel einen Anschlag bildet,
- hintere Befestigungsmittel (18), die über den Umfang des hinteren Randes des Laufrings (11) verteilt sind, und
- wenigstens ein längliches Element, das mit den hinteren Befestigungsmitteln (18) verbunden ist und an der hinteren Seitenfläche oder der Umfangsfläche des Reifens nach Betätigen der Festziehmittel einen Anschlag bildet,
**dadurch gekennzeichnet, dass** der Laufring (11) flexible Schuhe (12) umfasst, die entlang einem in sich geschlossenen Kettengürtel (13) verteilt sind, so dass der Laufring (11) eine durchgehende Form aufweist und die flexiblen Schuhe (12) entlang dem Kettengürtel (13) gleichmäßig verteilt sind, und dass jeder flexible Schuh (12) eine zur Rückseite des hinteren Randes des Laufrings (11) gerichtete flexible Erweiterung (18) umfasst, um die hinteren Befestigungsmittel (18) zu bilden.

2. Vorrichtung nach Anspruch 1, **dadurch gekennzeichnet, dass** das längliche Element verschieblich durch die hinteren Befestigungsmittel (18) verläuft und dass die Festziehmittel umfassen:
- wenigstens ein den Laufring (11) durchgreifendes Führungsorgan, um einen Teil des länglichen Elements sich quer zu dem Laufring (11), über den vorderen Rand des Laufrings (11) hinaus, frei verschieben zu lassen,
- elastisch dehnbare Mittel (23, 24), die entlang dem länglichen Element angeordnet sind, und
- Einhakmittel (25), um wenigstens ein Ende des länglichen Elements mit dem vorderen Element (17) zu verbinden.

3. Vorrichtung nach Anspruch 2, **dadurch gekennzeichnet, dass** das längliche Element durch zwei unabhängige Seile (19, 20) gebildet ist, die zwei getrennte Winkelsektoren des hinteren Randes des Laufrings (11) einfassen und jeweils einen jeweiligen Durchgang (21, 22) des Führungsorgans benutzen, und dass ein jedes der Seile (19, 20) ein elastisch dehnbares Organ (23, 24) umfasst.

4. Vorrichtung nach Anspruch 3, **dadurch gekennzeichnet, dass** das elastisch dehnbare Organ (23, 24) eines jeden der Seile (19, 20) jenseits des vorderen Randes des Laufrings (11) angeordnet ist.

5. Vorrichtung nach Anspruch 2, **dadurch gekennzeichnet, dass** die Einhakmittel (25) mit wenigstens einem mit dem vorderen Element (17) fest verbundenen Haken (15) zusammenwirken.

6. Vorrichtung nach Anspruch 1, **dadurch gekennzeichnet, dass** das längliche Element am Ende der flexiblen Erweiterung (18) frei verschieblich getragen ist.
